(19) Europäisches Patentamt
European Patent Office
Office européen des brevets

(11) **EP 4 446 821 A1**

(12) **EUROPEAN PATENT APPLICATION**

(43) Date of publication:
**16.10.2024 Bulletin 2024/42**

(21) Application number: **23167333.6**

(22) Date of filing: **11.04.2023**

(51) International Patent Classification (IPC):
**G03H 1/04** *(2006.01)*    **G03H 1/26** *(2006.01)*
**G03H 1/28** *(2006.01)*    *G03H 1/22* *(2006.01)*

(52) Cooperative Patent Classification (CPC):
**G03H 1/0408; G02B 27/0172; G03H 1/265;**
G03H 1/28; G03H 2001/0439; G03H 2001/2236;
G03H 2001/2284; G03H 2001/2655;
G03H 2001/266; G03H 2222/18; G03H 2222/34;
G03H 2223/16; G03H 2223/18; G03H 2227/03;
G03H 2240/52;                              (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HTC Corporation
Taoyuan City 330, (TW)**

(72) Inventor: **DENG, Qing-Long
330 Taoyuan City (TW)**

(74) Representative: **Wimmer, Hubert
Wagner & Geyer Partnerschaft mbB
Patent- und Rechtsanwälte
Gewürzmühlstrasse 5
80538 München (DE)**

(54) **METHOD OF MANUFACTURING OPTICAL ELEMENT AND OPTICAL EXPOSURE SYSTEM**

(57)    A method of manufacturing an optical element includes steps of: exposing a photopolymer to a plurality of kinds of light for a plurality of cycles, in which each of the cycles includes a plurality of exposure time sequences respectively corresponding to the kinds of light, and any adjacent two of the exposure time sequences of the cycles correspond to two of the kinds of light; and fixing the exposed photopolymer to form a holographic optical element having a plurality of holographic gratings respectively formed by the kinds of light.

Fig. 1

EP 4 446 821 A1

(52) Cooperative Patent Classification (CPC): (Cont.)
G03H 2260/12

**Description**

**BACKGROUND**

Technical Field

The present disclosure relates to a method of manufacturing an optical element and an optical exposure system.

Description of Related Art

Various types of computing, entertainment, and/or mobile devices can be implemented with a transparent or semi-transparent display through which a user of a device can view the surrounding environment. Such devices, which can be referred to as see-through, mixed reality display device systems, or as augmented reality (AR) systems, enable a user to see through the transparent or semi-transparent display of a device to view the surrounding environment, and also see images of virtual objects (e.g., text, graphics, video, etc.) that are generated for display to appear as a part of, and/or overlaid upon, the surrounding environment. These devices, which can be implemented as head-mounted display (HMD) glasses or other wearable display devices, but are not limited thereto, often utilize optical waveguides to replicate an image to a location where a user of a device can view the image as a virtual image in an augmented reality environment. As this is still an emerging technology, there are certain challenges associated with utilizing waveguides to display images of virtual objects to a user.

Nowadays, many conventional waveguides with diffraction gratings attached thereon have been used. Each of the waveguides and the diffraction gratings attached thereon are used for transmitting a single color. As such, a conventional optical exposure system for providing projected images to an eye of a user usually requires a plurality of waveguides to transmit three primary colors, which is not conducive to the reduction of weight and thickness of the optical exposure system. In addition, since the diffraction gratings on the conventional waveguides are required to transmit the projected images with an expanded viewing angle, the efficiency is low.

Accordingly, it is an important issue for the industry to provide a method of manufacturing an optical element and an optical exposure system capable of solving the aforementioned problems.

**SUMMARY**

An aspect of the disclosure is to provide a method of manufacturing an optical element and an optical exposure system that can efficiently solve the aforementioned problems.

According to an embodiment of the disclosure, a method of manufacturing an optical element includes steps of: exposing a photopolymer to a plurality of kinds of light for a plurality of cycles, in which each of the cycles includes a plurality of exposure time sequences respectively corresponding to the kinds of light, and any adjacent two of the exposure time sequences of the cycles respectively correspond to two of the kinds of light; and fixing the exposed photopolymer to form a holographic optical element having a plurality of holographic gratings respectively formed by the kinds of light.

In an embodiment of the disclosure, the kinds of light respectively have different wavelengths.

In an embodiment of the disclosure, the step of exposing includes: emitting the kinds of light respectively by a plurality of light sources; and sequentially controlling a plurality of light valves to respectively allow the kinds of light to pass through according to the exposure time sequences.

In an embodiment of the disclosure, the step of exposing includes sequentially controlling a plurality of light sources to respectively emit the kinds of light according to the exposure time sequences.

In an embodiment of the disclosure, the kinds of light respectively have different incident angles relative to the photopolymer.

In an embodiment of the disclosure, the kinds of light have an identical wavelength.

In an embodiment of the disclosure, the step of exposing includes sequentially rotating the photopolymer to a plurality of angles respectively corresponding to the kinds of light according to the exposure time sequences.

In an embodiment of the disclosure, the step of exposing exposes the photopolymer to the kinds of light respectively with a plurality of total exposure dosages, such that amounts of change in refractive index respectively of the holographic gratings relative to the photopolymer before the step of exposing are substantially equal.

According to an embodiment of the disclosure, an optical exposure system for manufacturing an optical element having a plurality of holographic gratings includes at least one light-emitting module, a plurality of light guiding elements, and at least one controller. The at least one light-emitting module is configured to generate a plurality of kinds of light respectively corresponding to the holographic gratings. The light guiding elements are configured to guide the kinds of light to a photopolymer. The at least one controller is configured to control the at least one light-emitting module to generate the kinds of light for a plurality of cycles. Each of the cycles includes a plurality of exposure time sequences respectively corresponding to the kinds of light. Any adjacent two of the exposure time sequences of the cycles respectively correspond to two of the kinds of light.

In an embodiment of the disclosure, the kinds of light respectively have different wavelengths.

In an embodiment of the disclosure, the at least one light-emitting module includes a plurality of light sources and a plurality of light valves. The light sources are configured to respectively emit the kinds of light. The light valves respectively disposed in front of the light sources. The at least one controller is configured to sequentially control the light valves to respectively allow the kinds of light to pass through according to the exposure time sequences.

In an embodiment of the disclosure, the at least one light-emitting module includes a plurality of light sources configured to respectively emit the kinds of light. The at least one controller is configured to sequentially control the light sources to respectively emit the kinds of light according to the exposure time sequences.

In an embodiment of the disclosure, the kinds of light respectively have different incident angles relative to the photopolymer.

In an embodiment of the disclosure, the kinds of light have an identical wavelength.

In an embodiment of the disclosure, the optical exposure system further includes a rotating member. The rotating member is configured to rotate the photopolymer. The at least one controller is further configured to control the rotating member to sequentially rotate the photopolymer to a plurality of angles respectively corresponding to the kinds of light according to the exposure time sequences.

In an embodiment of the disclosure, the light guiding elements are configured to respectively guide the kinds of light to the photopolymer with the incident angles. The optical exposure system further includes a plurality of light valves. The light valves are optically coupled to the photopolymer respectively via the light guiding elements. The at least one controller is configured to sequentially control the light valves to respectively allow the kinds of light to pass through according to the exposure time sequences.

Accordingly, in the some embodiments of the method of manufacturing an optical element and the optical exposure system of the present disclosure, by controlling the exposure time sequences in any of cycles to respectively correspond to different kinds of light, a plurality of holographic gratings can be respectively formed by the kinds of light after exposing the photopolymer for the cycles. In this way, the problem of poor manufacturing yield of at least one of these holographic gratings can be effectively avoided, and the quality of all the holographic gratings can be ensured to be relatively consistent and uniform.

It is to be understood that both the foregoing general description and the following detailed description are by examples, and are intended to provide further explanation of the disclosure as claimed.

## BRIEF DESCRIPTION OF THE DRAWINGS

The disclosure can be more fully understood by reading the following detailed description of the embodiment, with reference made to the accompanying drawings as follows:

Fig. 1 is a schematic diagram of an optical engine according to some embodiments of the present disclosure;

Fig. 2 is a schematic diagram illustrating holographic gratings in a holographic optical element according to some embodiments of the present disclosure;

Fig. 3 is a schematic diagram of an optical exposure system according to some embodiments of the present disclosure;

Fig. 4 is a flow chart of a method of manufacturing an optical element according to some embodiments of the present disclosure;

Fig. 5 is a diagram showing exposure time sequences of different kinds of light in cycles according to some embodiments of the present disclosure;

Fig. 6 is a diagram showing exposure time sequences of different kinds in one cycle according to some embodiments of the present disclosure;

Fig. 7 is a graph showing the relationship between total dosages and amount of change in refractive index of a photopolymer;

Fig. 8 is a schematic diagram of an optical exposure system according to some embodiments of the present disclosure;

Fig. 9 is a partial schematic diagram of the optical exposure system in Fig. 8;

Fig. 10 is a schematic diagram illustrating holographic gratings in a holographic optical element according to some embodiments of the present disclosure;

Fig. 11 is a diagram showing exposure time sequences of different kinds of light in cycles according to some embodiments of the present disclosure; and

Fig. 12 is a schematic diagram of an optical exposure system according to some embodiments of the present disclosure.

## DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

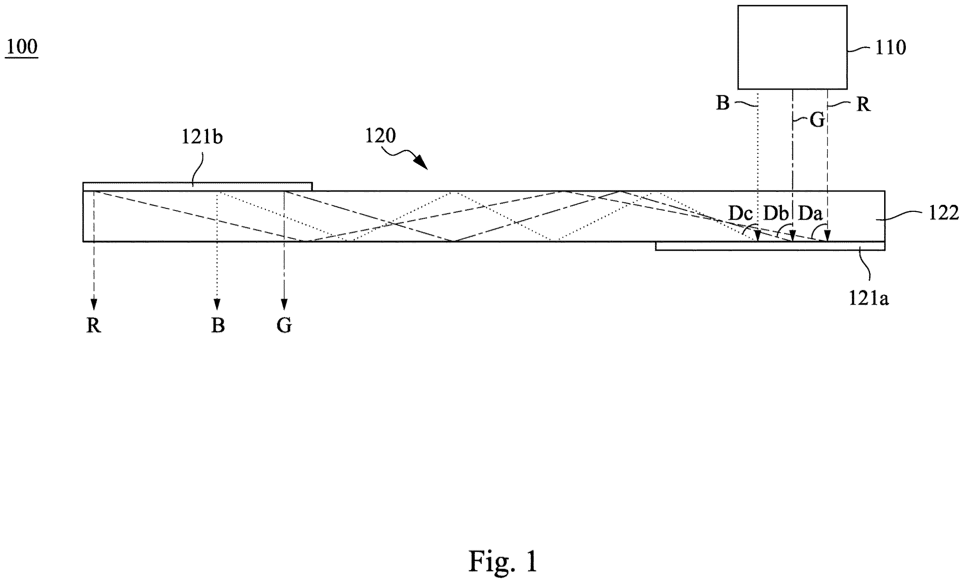

Reference is made to Fig. 1. Fig. 1 is a schematic diagram of an optical engine 100 according to some embodiments of the present disclosure. As shown in Fig. 1, the optical engine 100 may be used in an augmented reality device (not shown) which can be implemented as head-mounted display (HMD) glasses or other wearable display devices, but is not limited thereto. The optical engine 100 includes a projector 110 and a waveguide device 120. The waveguide device 120 includes two holographic optical elements 121a, 121b and a waveguide element 122. The holographic optical elements 121a, 121b are attached to the waveguide element 122 and serve as light guiding elements of light-input and light-output, respectively. That is, light projected by the projector 110 can be inputted to the holographic optical element 121a and outputted from the holographic optical element 121b, and the waveguide element 122 is configured to guide the light propagated from the holographic optical element 121a to the holographic optical element 121b based on the principle of total reflection.

In some embodiments, the projector 110 is configured to project red light R, green light G, and blue light B, but the disclosure is not limited in this regard. In some embodiments, the wavelength band of the red light R projected by the projector 110 is from about 622 nm to about 642 nm, but the disclosure is not limited in this regard. In some embodiments, the wavelength band of the green light G projected by the projector 110 is from about 522 nm to about 542 nm, but the disclosure is not limited in this regard. In some embodiments, the wavelength band of the blue light B projected by the projector 110 is from about 455 nm to about 475 nm, but the disclosure is not limited in this regard. In some embodiments, the projector 110 adopts light-emitting diodes to project the red light R, the green light G, and the blue light B. In practical applications, the projector 110 may adopt laser diodes to project the red light R, the green light G, and the blue light B with smaller wavelength band.

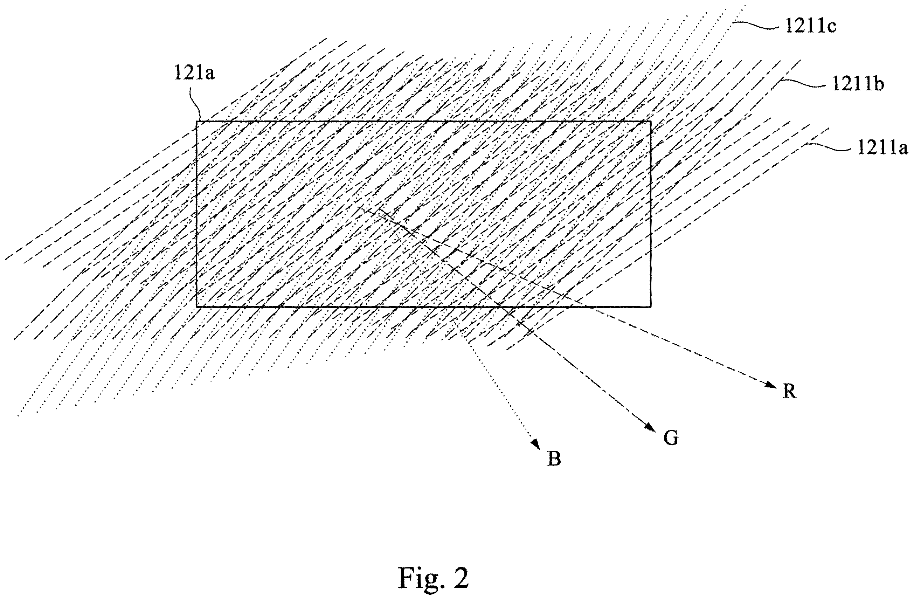

Reference is made to Fig. 2. Fig. 2 is a schematic diagram illustrating holographic gratings in the holographic optical element121a according to some embodiments of the present disclosure. For example, Fig. 2 shows a surface of the holographic optical element 121a attached to the waveguide element 122 as shown in Fig. 1, and the viewing angle of Fig. 2 is perpendicular to the surface of the holographic optical element 121a. As shown in Figs. 1 and 2, the holographic optical element 121a has a first holographic grating 1211a, a second holographic grating 1211b, and a third holographic grating 1211c. The first holographic grating 1211a is configured to diffract the red light R projected by the projector 110 to propagate with a first range of diffraction angle. For example, the first holographic grating 1211a is configured to diffract light of which the wavelength is 632 nm (which is within the wavelength band of the red light R) to propagate with a first diffraction angle Da. The second holographic grating 1211b is configured to diffract the green light G projected by the projector 110 to propagate with a second range of diffraction angle. For example, the second holographic grating 1211b is configured to diffract light of which the wavelength is 532 nm (which is within the wavelength band of the green light G) to propagate with a second diffraction angle Db. The third holographic grating 1211c is configured to diffract the green light B projected by the projector 110 to propagate with a third range of diffraction angle. For example, the third holographic grating 1211c is configured to diffract light of which the wavelength is 465 nm (which is within the wavelength band of the blue light B) to propagate with a first diffraction angle Dc. The waveguide element 122 is configured to guide the red light R, the green light G, and the blue light B propagated from the holographic optical element 121a to the holographic optical element 121b.

In some embodiments, the first holographic grating 1211a, the second holographic grating 1211b, and the third holographic grating 1211c are superimposed together. In other words, the first holographic grating 1211a, the second holographic grating 1211b, and the third holographic grating 1211c pass through each other. As such, the holographic optical element 121a can have a small size.

In some embodiments, the first holographic grating 1211a, the second holographic grating 1211b, and the third holographic grating 1211c are volume holographic gratings. It is notable that light diffracted by a volume holographic grating can propagate with a specific diffraction angle based on the Bragg's law.

In some embodiments, the holographic optical element 121b may also be formed with the first holographic grating 1211a, the second holographic grating 1211b, and the third holographic grating 1211c. As such, portions of the red light R, the green light G, and the blue light B propagating in the waveguide element 122 can be respectively diffracted by the first holographic grating 1211a, the second holographic grating 1211b, and the third holographic grating 1211c of the holographic optical element 121b and then be outputted out of the waveguide device 120 to reach an eye of a user.

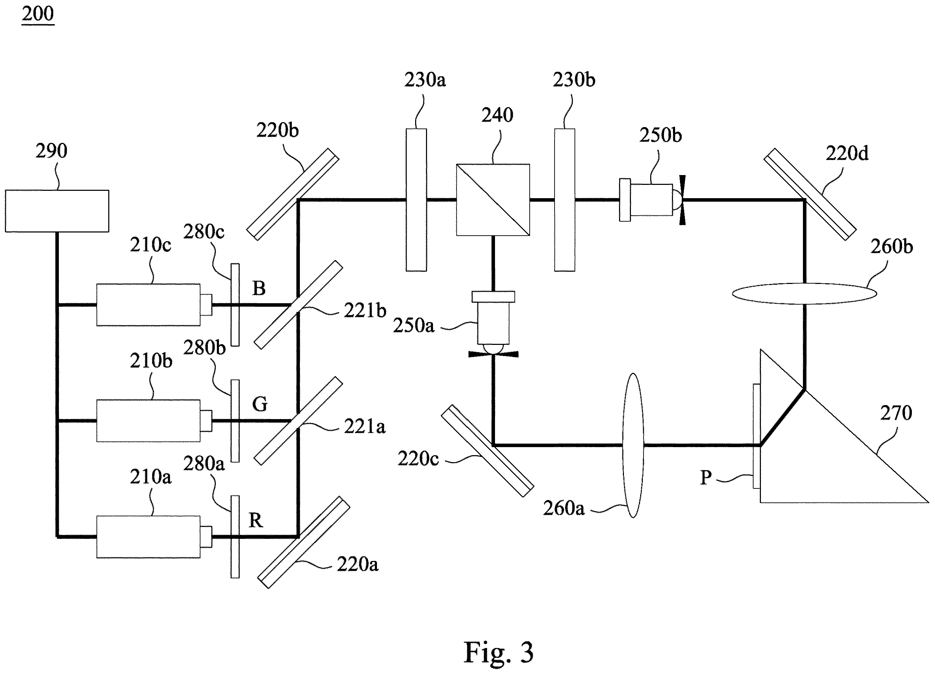

Reference is made to Fig. 3. Fig. 3 is a schematic view of an optical exposure system 200 according to some embodiments of the present disclosure. As shown in Fig. 3, the optical exposure system 200 includes three light sources 210a, 210b, 210c configured to emit the red light R, the green light G, and the blue light B, respectively. In some embodiments, the wavelength band of the red light R projected by the light sources 210a is about 633 nm, but the disclosure is not limited in this regard. In some embodiments, the wavelength band of the green light G projected by the light sources 210b is about 532 nm, but the disclosure is not limited in this regard. In some embodiments, the wavelength band of the blue light B projected by the light sources 210c is about 457 nm, but the disclosure is not limited in this regard. In some embodiments, the light sources 210a, 210b, 210c may be laser diodes, but the disclosure is not limited in this regard.

As shown in Fig. 3, the optical exposure system 200 further includes four reflective mirrors 220a, 220b, 220c, 220d, two dichroic mirrors 221a, 221b, two half-wave plates 230a, 230b, a polarizing beam splitter 240, two spatial filters 250a, 250b, two lenses 260a, 260b, a prism 270, and three light valves 280a, 280b, 280c. The light valve 280a is optically coupled between the light source 210a and the reflective mirror 220a. The light valve 280b is optically coupled between the light source 210b and the dichroic mirror 221a. The light valve 280c is optically coupled between the light source 210c and the dichroic mirror 221b. The dichroic mirrors 221a, 221b are optically coupled between the reflective mirrors 220a, 220b sequentially. The half-wave plate 230a is optically coupled between the reflective mirror 220b and the polarizing beam splitter 240. A photopolymer P is attached to a side of the prism 270. The polarizing beam splitter 240 is optically coupled to the prism 270 sequentially via the spatial filter 250a, the reflective mirror 220c, the lens 260a, and the photopolymer P. The polarizing beam splitter 240 is further optically coupled to the prism 270 sequentially via the half-wave plate 230b, the spatial filter 250b, the reflective mirror 220d, and the lens 260b.

Specifically, the light valves 280a, 280b, 280c are configured to respectively allow the red light R, the green light G, and the blue light B to pass through. The dichroic mirror 221a is configured to transmit the red light R and reflect the green light G. The dichroic mirror 221b is configured to transmit the red light R and the green light G and reflect the blue light B. Under the optical configurations of the optical exposure system 200 as shown in Fig. 3, two light beams of the red light R will be generated to reach opposite sides of the photopolymer P when the light source 210a emits the red light R and the light valve 280a allows the red light R pass through, two light beams of the green light G will be generated to reach the opposite sides of the photopolymer P when the light source 210b emits the green light G and the light valve 280b allows the green light G pass through, and two light beams of the blue light B will be generated to reach the opposite sides of the photopolymer P when the light source 210c emits the blue light B and the light valve 280c allows the blue light B pass through. A combination of the light source 210a and the light valve 280a may be regarded as a red light-emitting module, a combination of the light source 210b and the light valve 280b may be regarded as a green light-emitting module, and a combination of the light source 210c and the light valve 280c may be regarded as a blue light-emitting module.

In some embodiments, the light valves 280a, 280b, 280c are shutters, but the disclosure is not limited in this regard.

In some embodiments, as shown in Fig. 3, the optical exposure system 200 further includes a controller 290. The controller 290 is electrically connected to the light sources 210a, 210b, 210c, and is configured to control the light sources 210a, 210b, 210c to emit the red light R, the green light G, and the blue light B, respectively.

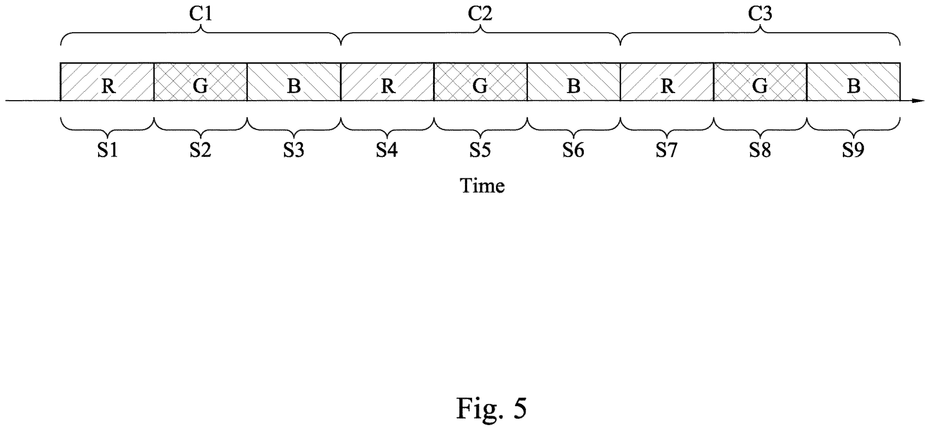

In some embodiments, the controller 290 (or another control unit) is electrically connected to the light valves 280a, 280b, 280c, and is further configured to control the light valves 280a, 280b, 280c to respectively allow the red light R, the green light G, and the blue light B to pass through. In some embodiments, the controller 290 (or with the another control unit) is configured to control the light-emitting modules to generate the red light R, the green light G, and the blue light B for a plurality of cycles (e.g., the cycles C1-C3 as shown in Fig. 5), in which each of the cycles includes a plurality of exposure time sequences respectively corresponding to the red light R, the green light G, and the blue light B, and any adjacent two of the exposure time sequences of the cycles respectively correspond to two of the red light R, the green light G, and the blue light B.

In some other embodiments, the light valves 280a, 280b, 280c in Fig. 3 may be omitted. In other words, light source 210a may be regarded as a red light-emitting module, the light source 210b may be regarded as a green light-emitting module, and the light source 210c may be regarded as a blue light-emitting module.

As shown in Fig. 3, the optical exposure system 200 is configured to expose a portion of the photopolymer P with two light beams of the red light R, the green light G, or the blue light B in difference incidence directions from the opposite sides of the photopolymer P. The photopolymer P includes monomer, polymer, photo-initiator, and binder. When the photopolymer P is subjected to an exposure process, the photo-initiator receives photons to generate radicals, so that the monomers begin to polymerize (i.e., polymerization). By using the exposure method of hologram interference fringe, the monomer that is not illuminated by the light (i.e., in dark zone) is diffused to the light irradiation zone (i.e., bright zone) and polymerized, thereby causing a non-uniform concentration gradient of the polymer. And finally, after fixing, phase gratings (i.e., the first holographic grating 1211a, the second holographic grating 1211b, and the third holographic grating 1211c) each including bright and dark stripes arranged in a staggered manner can be formed, and the photopolymer P is transformed to the holographic optical element 121a.

In some embodiments, a volume holographic grating can form a transmissive holographic grating or a reflective holographic grating according to different manufacturing methods. Specifically, as shown in Fig. 3, by exposing the photopolymer P with two light beams in difference incidence directions from the opposite sides of the photopolymer P, the holographic optical element 121a can be manufactured as a reflective holographic element (i.e., the first holographic grating 1211a, the second holographic grating 1211b, and the third holographic grating 1211c are reflective holographic gratings). In some other embodiments, by exposing the photopolymer P with two light beams in difference incidence directions from the same side of the photopolymer P (the optical path of the optical exposure system 200 as shown in Fig. 3 needs to be modified), the holographic optical element 121a can be manufactured as a transmissive holographic element (i.e., the first holographic grating 1211a, the second holographic grating 1211b, and the third holographic grating 1211c are transmissive holographic gratings).

In some embodiments, the holographic optical element 121b can also be manufactured as a transmissive holographic element or a reflective holographic element. For example, as shown in Fig. 1, the holographic optical elements 121a, 121b are both reflective holographic elements and at opposite sides of the waveguide element 122 respectively. Specifically, the holographic optical elements 121a, 121b are respectively attached to a first surface 122a and a second surface 122b of the waveguide element 122.

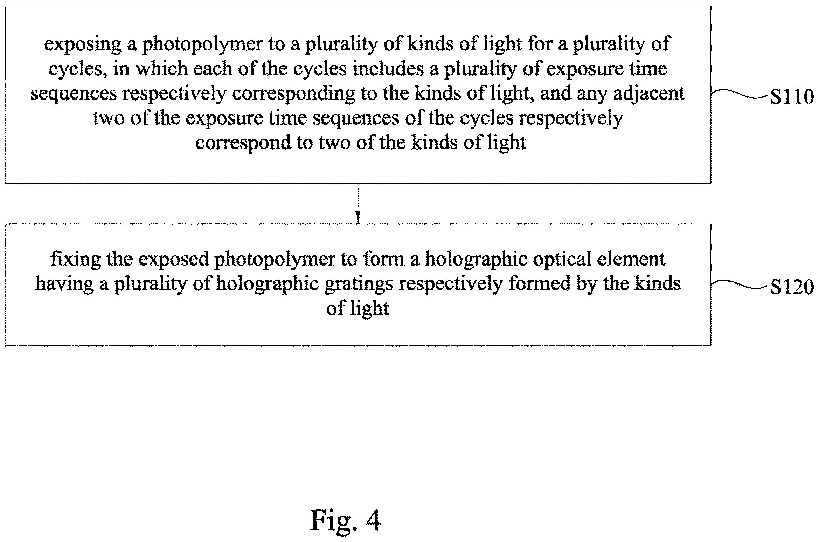

Reference is made to Fig. 4. Fig. 4 is a flow chart of a method of manufacturing an optical element according to some embodiments of the present disclosure. As shown in Fig. 4 with reference to the optical exposure system 200 of Fig. 3, the method of manufacturing an optical element mainly includes steps S110 and S120. The method of manufacturing an optical element begins with step S110 in which a photopolymer P is exposed to a plurality of kinds of light (e.g., the red light R, the green light G, and the blue light B) for a plurality of cycles, in which each of the cycles includes a plurality of exposure time sequences respectively corresponding to the kinds of light, and any adjacent two of the exposure time sequences of the cycles respectively correspond to two of the kinds of light. The method of manufacturing an optical element continues with step S120 in which the exposed photopolymer P is fixed to form a holographic optical element (e.g., the holographic optical element 121a) having a plurality of holographic gratings (e.g., the first holographic grating 1211a, the second holographic grating 1211b, and the third holographic grating 1211c) respectively formed by the kinds of light.

In some embodiments, step S110 may include steps S111a and S111b. In step S111a, the kinds of light are emitted respectively by a plurality of light sources (e.g., the light sources 210a, 210b, 210c). In step S111b, a plurality of light valves (e.g., the light valves 280a, 280b, 280c) is sequentially controlled to respectively allow the kinds of light (e.g., the red light R, the green light G, and the blue light B) to pass through according to the exposure time sequences.

In some embodiments, step S110 may include step S112. In step S112, a plurality of light sources (e.g., the light sources 210a, 210b, 210c) are sequentially controlled to respectively emit the kinds of light (e.g., the red light R, the green light G, and the blue light B) according to the exposure time sequences.

Reference is made to Fig. 5. Fig. 5 is a diagram showing exposure time sequences of different kinds of light in cycles according to some embodiments of the present disclosure. As shown in Fig. 5, the exposure time sequences can be divided into three cycles C1, C2, C3. Each of the cycles C1, C2, C3 has three exposure time sequences respectively corresponding to the red light R, the green light G, and the blue light B. Specifically, the cycle C1 has the exposure time sequences S1, S2, S3 respectively corresponding to the red light R, the green light G, and the blue light B, the cycle C2 has the exposure time sequences S4, S5, S6 respectively corresponding to the red light R, the green light G, and the blue light B, and the cycle C3 has the exposure time sequences S7, S8 S9 respectively corresponding to the red light R, the green light G, and the blue light B, but the disclosure is not limited in this regard.

In practical applications, the number of the cycles is not limited to three as shown in Fig. 5 and can be flexibly changed. In practical applications, the number of the exposure time sequences in any of the cycles is not limited to three as shown in Fig. 5 and can be flexibly changed. In practical applications, the number of the kinds of light is not limited to three and can be flexibly changed.

It should be pointed out that by exposing the photopolymer P for parts of the cycles C1-C3 as shown in Fig. 5, the first holographic grating 1211a, the second holographic grating 1211b, and the third holographic grating 1211c are formed in the photopolymer P with less pronounced contrast. After the photopolymer P is sequentially exposed for the cycles C1-C3, the first holographic grating 1211a, the second holographic grating 1211b, and the third holographic grating 1211c can be formed in the photopolymer P with more pronounced contrast. In this way, the problem of poor manufacturing yield of at least one of the first holographic grating 1211a, the second holographic grating 1211b, and the third holographic grating 1211c can be effectively avoided, and the quality of the first holographic grating 1211a, the second holographic grating 1211b, and the third holographic grating 1211c can be ensured to be relatively consistent and uniform.

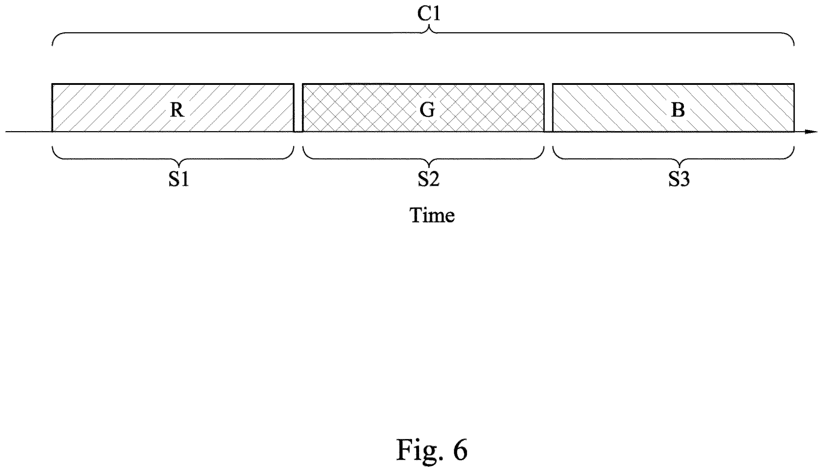

As shown in Fig. 5, there is no blank between any adjacent two of the exposure time sequences S1-S9, but the disclosure is not limited in this regard. Reference is made to Fig. 6. Fig. 6 is a diagram showing exposure time sequences of different kinds in one cycle according to some embodiments of the present disclosure. As shown in Fig. 6, the cycle C1 has the exposure time sequences S1, S2, S3 respectively corresponding to the red light R, the green light G, and the blue light B, a blank is sandwiched between the exposure time sequences S1, S2, and a blank is sandwiched between the exposure time sequences S2, S3.

Through the above description, it is clear that phase gratings can be formed through a photochemical reaction mechanism and established through a dual-light interference exposure system (e.g., the optical exposure system 200 as shown in Fig. 3). In the optical exposure system 200, the intensity of the lights emitted by the light sources 210a, 210b, 210c and the exposure time sequences are controlled to reach the dosages required by the holographic photosensitive material (i.e., the photopolymer P). When the required dosages of photopolymer are reached, the gratings are formed. The dosages can be calculated by the following equation (1).

$$\text{Dosage } (\text{mJ/cm}^2) = \text{Power density } (\text{mW/cm}^2) \times \text{Exposure time } (\text{s}) \quad (1)$$

In addition, when the photopolymer P begins to be exposed to form a grating, it is known that there will be a chemical mechanism called inhibition. The purpose of this is to avoid chemical activation of the material when it is initially exposed to an unstable exposure environment, causing unnecessary grating formation or noise. The conditions required for inhibition may be considered in the method of the present disclosure, so as to make the contrast of fringes more obvious during the formation of the gratings.

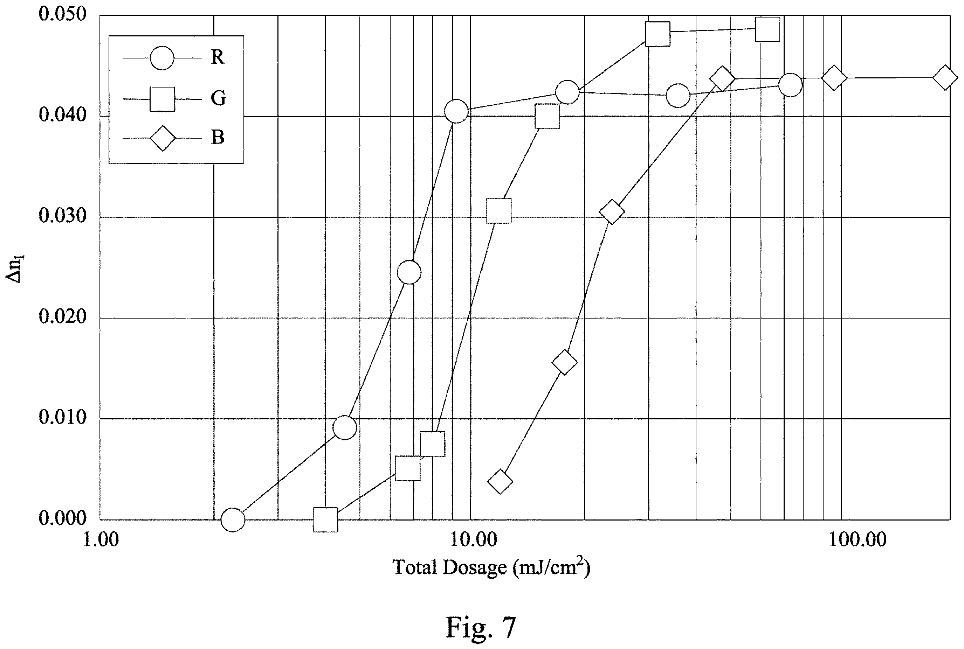

Reference is made to Fig. 7. Fig. 7 is a graph showing the relationship between total dosages and amount of change in refractive index (i.e., $\Delta n_1$) of a photopolymer. As shown in Fig. 7, the inhibition dosage of the red light R needs 2 $\text{mJ/cm}^2$, and the saturation reaction can be reached after 9 $\text{mJ/cm}^2$. The inhibition dosage of the green light G requires 4 $\text{mJ/cm}^2$, and the saturation reaction can be reached after 30 $\text{mJ/cm}^2$. The inhibition dosage of the blue light B requires 12 $\text{mJ/cm}^2$, and the saturation reaction can be reached after 50 $\text{mJ/cm}^2$.

In some embodiments, the number of the cycles of exposure may be determined by using the minimum reaction dosage of the target refractive index modulation as a normalization condition. For example, the reaction dosage of the red light R is 3 $\text{mJ/cm}^2$, the reaction dosage of the green light G is 24 $\text{mJ/cm}^2$, and the reaction dosage of the blue light B is 60 $\text{mJ/cm}^2$. Therefore, when the number of the cycles is three, the periodic dosages of the red light R, the green light G, and the blue light B in each of the three cycles can be defined as 1 $\text{mJ/cm}^2$, 8 $\text{mJ/cm}^2$, and 20 $\text{mJ/cm}^2$ respectively. In addition, if the exposure time of each of the exposure time sequences is set to 1 second, the power density of the red light R is 3 $\text{mW/cm}^2$, the power density of the green light G is 8 $\text{mW/cm}^2$, and the power density of the blue light B is 20 $\text{mW/cm}^2$ according to the above equation (1). After sequentially exposing for the three cycles, the establishment of the phase gratings with the target refractive index modulation of the three color lights can be completed.

In addition, if the photopolymer P needs to carry out the activation mechanism of inhibition, one or two additional cycles can be increased at the beginning. As mentioned above, the inhibition dosage of the red light R needs 2 $\text{mJ/cm}^2$, the inhibition dosage of the green light G requires 4 $\text{mJ/cm}^2$, and the inhibition dosage of the blue light B requires 12 $\text{mJ/cm}^2$. Therefore, after the first cycle of exposure, the photopolymer P may have completed the activation reaction for the three color lights, and three subsequent cycles of exposure can complete the establishment of the phase gratings with the target refractive index modulation of the three color lights. In other words, the phase gratings respectively formed by the red light R, the green light G, and the blue light B may have substantially equal amounts of change in refractive index relative to the refractive index of the photopolymer P before being exposed. In this way, the quality of the phase gratings can be ensured to be relatively consistent and uniform.

In some embodiments, the dosages respectively of the red light R, the green light G, and the blue light B in each cycle of exposure used in the method of the present disclosure can be absolute dosages. For example, the reaction dosage of the red light R is 6 $\text{mJ/cm}^2$, the reaction dosage of the green light G is 27 $\text{mJ/cm}^2$, and the reaction dosage of the blue light B is 56 $\text{mJ/cm}^2$. If the number of the cycles of exposure is six, the absolute dosage of the red light R in each cycle of exposure will be 1 mJ/cm$^2$, the absolute dosage of the green light G in each cycle of exposure will be 4.5 mJ/cm$^2$, and the absolute dosage of the blue light B in each cycle of exposure will be 9.33 mJ/cm$^2$.

In some embodiments, the dosages respectively of the red light R, the green light G, and the blue light B in each cycle of exposure used in the method of the present disclosure can be flexible dosages. For example, the reaction dosage of the red light R is 6 mJ/cm$^2$, the reaction dosage of the green light G is 27 mJ/cm$^2$, and the reaction dosage of the blue light B is 56 mJ/cm$^2$. If the number of the cycles of exposure is six, the flexible dosage of the red light R in each cycle of exposure will be 1 mJ/cm$^2$, the flexible dosage of the green light G in each cycle of exposure will be 5 mJ/cm$^2$, and the flexible dosage of the blue light B in each cycle of exposure will be 9 mJ/cm$^2$. That is, the flexible dosages are integers for the absolute dosages respectively.

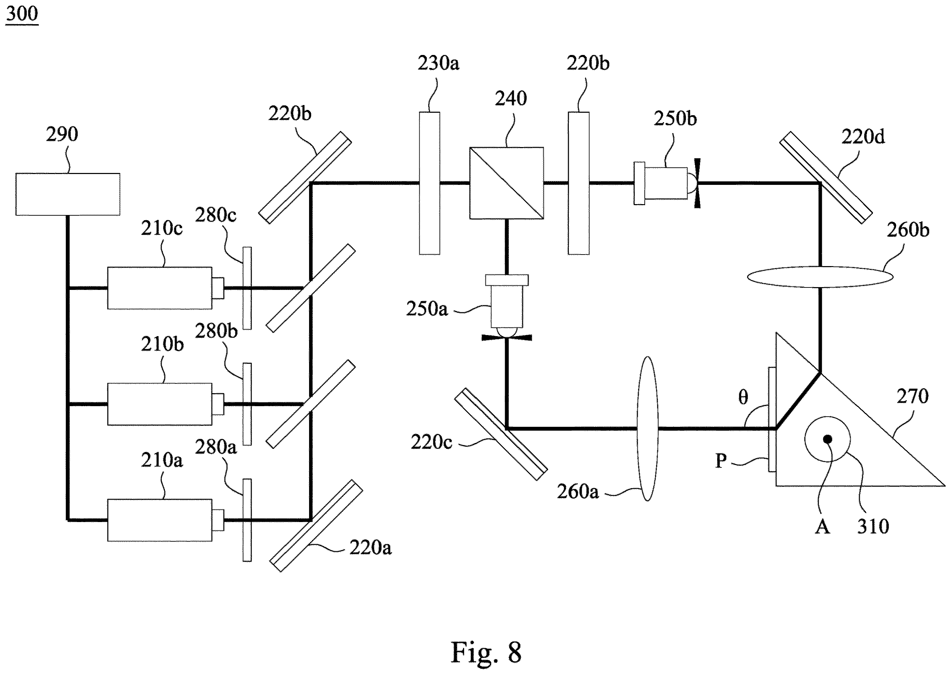

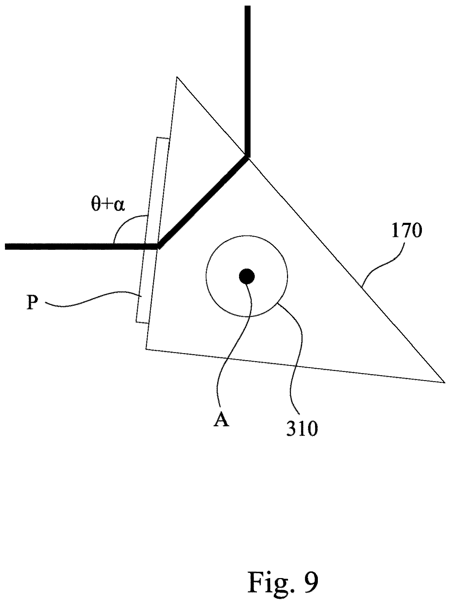

Reference is made to Figs. 8 and 9. Fig. 8 is a schematic diagram of an optical exposure system 300 according to some embodiments of the present disclosure. Fig. 9 is a partial schematic diagram of the optical exposure system 300 in Fig. 8. As shown in Figs. 8 and 9, the optical exposure system 300 includes three light sources 210a, 210b, 210c, four reflective mirrors 220a, 220b, 220c, 220d, two dichroic mirrors 221a, 221b, two half-wave plates 230a, 230b, a polarizing beam splitter 240, two spatial filters 250a, 250b, two lenses 260a, 260b, a prism 270, three light valves 280a, 280b, 280c, and a controller 290, and these components are identical or similar to those of the optical exposure system 200 as shown in Fig. 3, so the description of these components can be seen above, and will not be repeated here for brevity. Compared with the optical exposure system 200 as shown in Fig. 3, the optical exposure system 300 further includes a rotating member 310. The rotating member 310 is configured to rotate the prism 270 around an axis A, so as to rotate the photopolymer P attached on the prism 270. For example, the rotating member 310 may be a motor, but the disclosure is not limited in this regard.

In some embodiments, the controller 290 (or another control unit) is electrically connected to the rotating member 310, and is configured to control the rotating member 310 to sequentially rotate the photopolymer P to a plurality of angles respectively corresponding to different kinds of light according to the exposure time sequences. That is, the kinds of light respectively have different incident angles relative to the photopolymer P. For example, a first kind of light is one of the light beams of the red light R having an incident angle $\theta$ as shown in Fig. 8, a second kind of light is one of the light beams of the red light R having an incident angle $\theta+\alpha$ as shown in Fig. 9, and a third kind of light is one of the light beams of the red light R having an incident angle $\theta+2\alpha$ (not shown). For example, $\theta$ may be 90° and $\alpha$ may be 5°, but the disclosure is not limited in this regard.

In practical applications, the number of the different incident angles is not limited to three (i.e., $\theta$, $\theta+\alpha$, $\theta+2\alpha$) and can be flexibly changed.

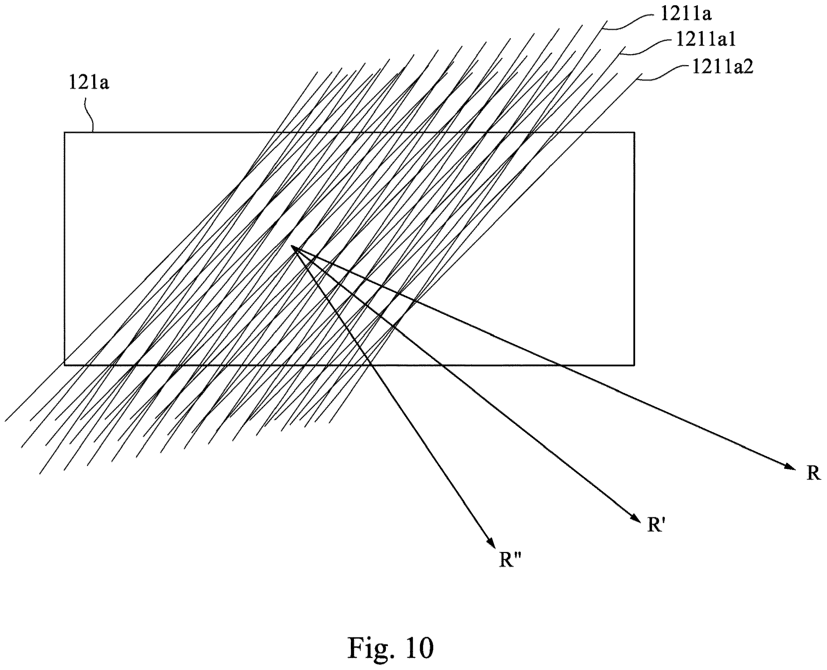

Reference is made to Fig. 10. Fig. 10 is a schematic diagram illustrating holographic gratings in the holographic optical element 121a according to some embodiments of the present disclosure. For example, Fig. 10 shows the surface of the holographic optical element 121a attached to the waveguide element 122 as shown in Fig. 1, and the viewing angle of Fig. 10 is perpendicular to the surface of the holographic optical element 121a. As shown in Fig. 10, in addition to the first holographic grating 1211a, the holographic optical element 121a further has a fourth holographic grating 1211a1 and a fifth holographic grating 1211a2. The fourth holographic grating 1211a1 is configured to diffract the red light R to propagate with a fourth range of diffraction angle. For example, the fourth holographic grating 1211a1 is configured to diffract light of which the wavelength is 632 nm to propagate with a fourth diffraction angle which is equal to the first diffraction angle Da plus 5 degrees (as indicated by light R' shown in Fig. 10). The fifth holographic grating 1211a2 is configured to diffract the red light R to propagate with a fifth range of diffraction angle. For example, the fifth holographic grating 1211a2 is configured to diffract light of which the wavelength is 632 nm to propagate with a fifth diffraction angle which is equal to the first diffraction angle Da plus 10 degrees (as indicated by light R" shown in Fig. 10).

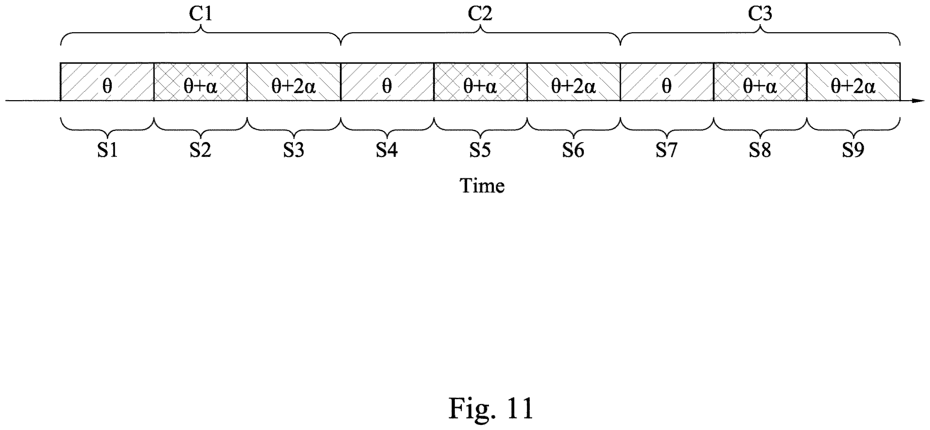

Reference is made to Fig. 11. Fig. 11 is a diagram showing exposure time sequences of different kinds of light in cycles according to some embodiments of the present disclosure. As shown in Fig. 11, the exposure time sequences can be divided into three cycles C1, C2, C3. Each of the cycles C1, C2, C3 has three exposure time sequences respectively corresponding to the kinds of light respectively have different incident angles $\theta$, $\theta+\alpha$, $\theta+2\alpha$ relative to the photopolymer P. Specifically, the cycle C1 has the exposure time sequences S1, S2, S3 respectively corresponding to the kinds of light respectively have different incident angles $\theta$, $\theta+\alpha$, $\theta+2\alpha$, the cycle C2 has the exposure time sequences S4, S5, S6 respectively corresponding to the kinds of light respectively have different incident angles $\theta$, $\theta+\alpha$, $\theta+2\alpha$, and the blue light B, and the cycle C3 has the exposure time sequences S7, S8 S9 respectively corresponding to the kinds of light respectively have different incident angles $\theta$, $\theta+\alpha$, $\theta+2\alpha$, but the disclosure is not limited in this regard.

It should be pointed out that by exposing the photopolymer P for parts of the cycles C1-C3 as shown in Fig. 11, the first holographic grating 1211a, the fourth holographic grating 1211a1, and the fifth holographic grating 1211a2 are formed in the photopolymer P with less pronounced contrast. After the photopolymer P is sequentially exposed for the cycles C1-C3, the first holographic grating 1211a, the fourth holographic grating 1211a1, and the fifth holographic grating 1211a2 can be formed in the photopolymer P with more pronounced contrast. In this way, the problem of poor manufacturing yield of at least one of the first holographic grating 1211a, the fourth holographic grating 1211a1, and the fifth holographic grating 1211a2 can be effectively avoided, and the quality of the first holographic grating 1211a, the fourth holographic grating 1211a1, and the fifth holographic grating 1211a2 can be ensured to be relatively consistent and uniform.

In practical applications, the number of the cycles is not limited to three as shown in Fig. 11 and can be flexibly changed. In practical applications, the number of the exposure time sequences in any of the cycles is not limited to three as shown in Fig. 11 and can be flexibly changed. In practical applications, the number of the kinds of light is not limited to three and can be flexibly changed.

In some embodiments, any of the exposure time sequence S1, S4, S7 as shown in Fig. 5 may be cut into three periods respectively corresponding to the kinds of light respectively have different incident angles θ, θ+α, θ+2α relative to the photopolymer P. After the photopolymer P is sequentially exposed for the cycles C1-C3 by using the optical exposure system 300 as shown in Fig. 8, the first holographic grating 1211a, the second holographic grating 1211b, the third holographic grating 1211c, the fourth holographic grating 1211a1, and the fifth holographic grating 1211a2 can be formed in the photopolymer P.

In some embodiments, any of the exposure time sequence S1-S9 as shown in Fig. 5 may be cut into three periods respectively corresponding to the kinds of light respectively have different incident angles θ, θ+α, θ+2α relative to the photopolymer P. After the photopolymer P is sequentially exposed for the cycles C1-C3 by using the optical exposure system 300 as shown in Fig. 8, there will be nine holographic gratings (including the first holographic grating 1211a, the second holographic grating 1211b, the third holographic grating 1211c, the fourth holographic grating 1211a1, and the fifth holographic grating 1211a2) formed in the photopolymer P.

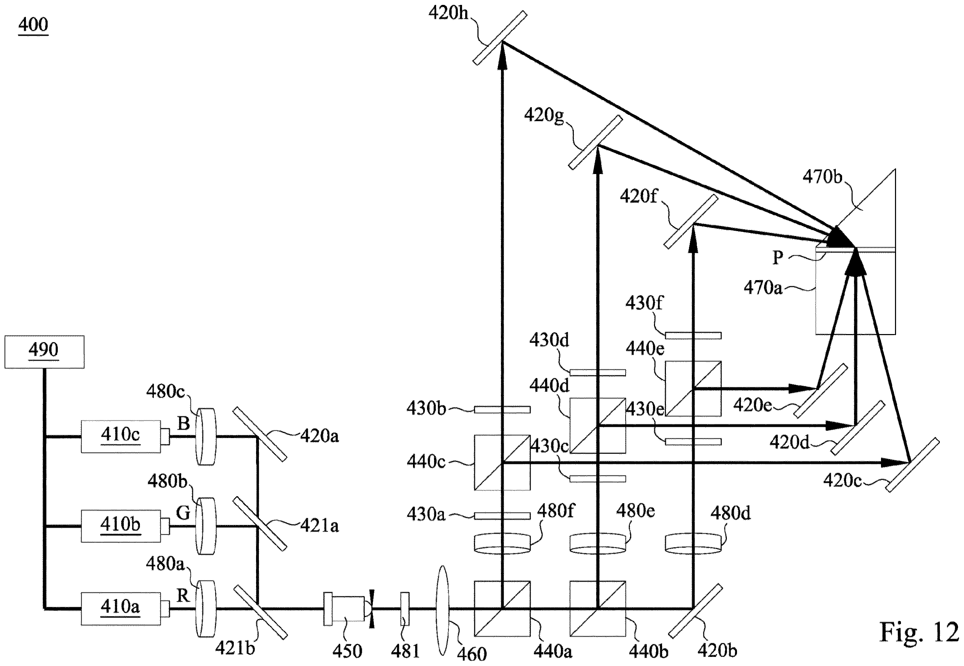

Reference is made to Fig. 12. Fig. 12 is a schematic diagram of an optical exposure system 400 according to some embodiments of the present disclosure. As shown in Fig. 12, the optical exposure system 400 includes three light sources 410a, 410b, 410c configured to emit the red light R, the green light G, and the blue light B, respectively. The light sources 410a, 410b, 410c are identical to the light sources 210a, 210b, 210c in Fig. 3, so the description of these components can be seen above, and will not be repeated here for brevity. The optical exposure system 400 further includes a plurality of light guiding elements configured to guide the red light R, the green light G, and the blue light B to the photopolymer P. Specifically, the optical exposure system 400 further includes eight reflective mirrors 420a, 420b, 420c, 420d, 420e, 420f, 420g, 420h, two dichroic mirrors 421a, 421b, six half-wave plates 430a, 430b, 430c, 430d, 430e, 430f, two beam splitters 440a, 440b, three polarizing beam splitters 440c, 440d, 440e, a spatial filter 450, a lens 460, two prisms 470a, 470b, six light valves 480a, 480b, 480c, 480d, 480e, 480f, and an iris diaphragm 481. The light valve 480a is optically coupled between the light source 410a and the dichroic mirror 421b. The light valve 480b is optically coupled between the light source 410b and the dichroic mirror 421a. The light valve 480c is optically coupled between the light source 410c and the reflective mirror 420a. The dichroic mirrors 421a, 421b are optically coupled between the reflective mirror 420a and the spatial filter 450 sequentially. The spatial filter 450 is optically coupled to the reflective mirror 420b sequentially via the iris diaphragm 481, the lens 460, and the beam splitters 440a, 440b.

In detail, the light valves 480a, 480b, 480c are configured to respectively allow the red light R, the green light G, and the blue light B to pass through. The dichroic mirror 421b is configured to transmit the red light R and reflect the green light G and the blue light B. The dichroic mirror 421a is configured to transmit the blue light B and reflect the green light G. Under the optical configurations of the optical exposure system 400 as shown in Fig. 12, the red light R will be generated to reach the spatial filter 450 when the light source 410a emits the red light R and the light valve 480a allows the red light R pass through, the green light G will be generated to reach the spatial filter 450 when the light source 410b emits the green light G and the light valve 480b allows the green light G pass through, and the blue light B will be generated to reach the spatial filter 450 when the light source 410c emits the blue light B and the light valve 480c allows the blue light B pass through. A combination of the light source 410a and the light valve 480a may be regarded as a red light-emitting module, a combination of the light source 410b and the light valve 480b may be regarded as a green light-emitting module, and a combination of the light source 410c and the light valve 480c may be regarded as a blue light-emitting module.

In some embodiments, the light valves 480a, 480b, 480c are shutters, but the disclosure is not limited in this regard.

In some embodiments, as shown in Fig. 12, the optical exposure system 400 further includes a controller 490. The controller 490 is electrically connected to the light sources 410a, 410b, 410c, and is configured to control the light sources 410a, 410b, 410c to emit the red light R, the green light G, and the blue light B, respectively.

In some embodiments, the controller 490 (or another control unit) is electrically connected to the light valves 480a, 480b, 480c, and is further configured to control the light valves 480a, 480b, 480c to respectively allow the red light R, the green light G, and the blue light B to pass through. In this way, the controller 490 (or with the another control unit) is configured to control the light-emitting modules to generate the red light R, the green light G, and the blue light B for a plurality of cycles (e.g., the cycles C1-C3 as shown in Fig. 5), in which each of the cycles includes a plurality of exposure time sequences respectively corresponding to the red light R, the green light G, and the blue light B, and any adjacent two of the exposure time sequences of the cycles respectively correspond to two of the red light R, the green light G, and the blue light B.

In some other embodiments, the light valves 480a, 480b, 480c in Fig. 12 may be omitted. In other words, light source 410a may be regarded as a red light-emitting module, the light source 410b may be regarded as a green light-emitting module, and the light source 410c may be regarded as a blue light-emitting module.

As shown in Fig. 12, a photopolymer P is sandwiched between the prisms 470a, 470b. In other words, the prisms 470a, 470b are respectively attached to opposite sides of the photopolymer P. The description of the photopolymer P can be seen above, and will not be repeated here for brevity. The beam splitter 440a is optically coupled to the prism 470a sequentially via the light valve 480f, the half-wave plate 430a, the polarizing beam splitter 440c, and the reflective mirror 420c. The beam splitter 440a is further optically coupled to the prism 470b sequentially via the light valve 480f, the half-wave plate 430a, the polarizing beam splitter 440c, the half-wave plate 430b, and the reflective mirror 420h. The beam splitter 440b is optically coupled to the prism 470a sequentially via the light valve 480e, the half-wave plate 430c, the polarizing beam splitter 440d, and the reflective mirror 420d. The beam splitter 440b is optically coupled to the prism 470b sequentially via the light valve 480e, the half-wave plate 430c, the polarizing beam splitter 440d, the half-wave plate 430d, and the reflective mirror 420g. The reflective mirror 420b is optically coupled to the prism 470a sequentially via the light valve 480d, the half-wave plate 430e, the polarizing beam splitter 440e, and the reflective mirror 420e. The reflective mirror 420b is optically coupled to the prism 470b sequentially via the light valve 480d, the half-wave plate 430e, the polarizing beam splitter 440e, the half-wave plate 430f, and the reflective mirror 420f.

Under the optical configurations of the optical exposure system 400 as shown in Fig. 12, a first pair of light beams of the red light R will be generated to reach the opposite sides of the photopolymer P respectively with a first set of incident angles (one of which is $\theta$ for example) when the light source 410a emits the red light R and the light valves 480a, 480d allows the red light R pass through, a second pair of light beams of the red light R will be generated to reach the opposite sides of the photopolymer P respectively with a second set of incident angles (one of which is $\theta+\alpha$ for example) when the light source 410a emits the red light R and the light valves 480a, 480e allows the red light R pass through, and a third pair of light beams of the red light R will be generated to reach the opposite sides of the photopolymer P respectively with a third set of incident angles (one of which is $\theta+2\alpha$ for example) when the light source 410a emits the red light R and the light valves 480a, 480f allows the red light R pass through. In this way, the optical exposure system 400 as shown in Fig. 12 can be used to manufacture the first holographic grating 1211a, the fourth holographic grating 1211a1, and the fifth holographic grating 1211a2 in the photopolymer P as shown in Fig. 10.

In some embodiments, the controller 490 (or another control unit) is electrically connected to the light valves 480d, 480e, 480f, and is further configured to control the light valves 480a, 480b, 480c to sequentially allow the red light R to pass through, sequentially allow the green light G to pass through, and sequentially allow the blue light B to pass through.

In some embodiments, any of the exposure time sequence S1, S4, S7 as shown in Fig. 5 may be cut into three periods respectively corresponding to the kinds of light respectively have different incident angles $\theta$, $\theta+\alpha$, $\theta+2\alpha$ relative to the photopolymer P. After the photopolymer P is sequentially exposed for the cycles C1-C3 by using the optical exposure system 400 as shown in Fig. 12, the first holographic grating 1211a, the second holographic grating 1211b, the third holographic grating 1211c, the fourth holographic grating 1211a1, and the fifth holographic grating 1211a2 can be formed in the photopolymer P.

In some embodiments, any of the exposure time sequence S1-S9 as shown in Fig. 5 may be cut into three periods respectively corresponding to the kinds of light respectively have different incident angles $\theta$, $\theta+\alpha$, $\theta+2\alpha$ relative to the photopolymer P. After the photopolymer P is sequentially exposed for the cycles C1-C3 by using the optical exposure system 400 as shown in Fig. 12, there will be nine holographic gratings (including the first holographic grating 1211a, the second holographic grating 1211b, the third holographic grating 1211c, the fourth holographic grating 1211a1, and the fifth holographic grating 1211a2) formed in the photopolymer P.

According to the foregoing recitations of the embodiments of the disclosure, it can be seen that in the some embodiments of the method of manufacturing an optical element and the optical exposure system of the present disclosure, by controlling the exposure time sequences in any of cycles to respectively correspond to different kinds of light, a plurality of holographic gratings can be respectively formed by the kinds of light after exposing the photopolymer for the cycles. In this way, the problem of poor manufacturing yield of at least one of these holographic gratings can be effectively avoided, and the quality of all the holographic gratings can be ensured to be relatively consistent and uniform.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

**Claims**

1. A method of manufacturing an optical element, comprising steps of:

   exposing a photopolymer to a plurality of kinds of light for a plurality of cycles, wherein each of the cycles comprises a plurality of exposure time sequences respectively corresponding to the kinds of light, and any adjacent two of the exposure time sequences of the cycles respectively correspond to two of the kinds of light; and fixing the exposed photopolymer to form a holographic optical element having a plurality of holographic gratings respectively formed by the kinds of light.

2. The method of claim 1, wherein the kinds of light respectively have different wavelengths.

3. The method of claim 2, wherein the step of exposing comprises:

   emitting the kinds of light respectively by a plurality of light sources; and sequentially controlling a plurality of light valves to respectively allow the kinds of light to pass through according to the exposure time sequences.

4. The method of claim 2, wherein the step of exposing comprises: sequentially controlling a plurality of light sources to respectively emit the kinds of light according to the exposure time sequences.

5. The method of claim 1, wherein the kinds of light respectively have different incident angles relative to the photopolymer.

6. The method of claim 5, wherein the step of exposing comprises: sequentially rotating the photopolymer to a plurality of angles respectively corresponding to the kinds of light according to the exposure time sequences.

7. The method of claim 5, wherein the step of exposing exposes the photopolymer to the kinds of light respectively with a plurality of total exposure dosages, such that amounts of change in refractive index respectively of the holographic gratings relative to the photopolymer before the step of exposing are substantially equal.

8. An optical exposure system for manufacturing an optical element having a plurality of holographic gratings, the optical exposure system comprising:

   at least one light-emitting module configured to generate a plurality of kinds of light respectively corresponding to the holographic gratings;
   a plurality of light guiding elements configured to guide the kinds of light to a photopolymer; and
   at least one controller configured to control the at least one light-emitting module to generate the kinds of light for a plurality of cycles, wherein each of the cycles comprises a plurality of exposure time sequences respectively corresponding to the kinds of light, and any adjacent two of the exposure time sequences of the cycles respectively correspond to two of the kinds of light.

9. The optical exposure system of claim 8, wherein the kinds of light respectively have different wavelengths.

10. The optical exposure system of claim 9, wherein the at least one light-emitting module comprises:

    a plurality of light sources configured to respectively emit the kinds of light; and
    a plurality of light valves respectively disposed in front of the light sources,
    wherein the at least one controller is configured to sequentially control the light valves to respectively allow the kinds of light to pass through according to the exposure time sequences.

11. The optical exposure system of claim 9, wherein the at least one light-emitting module comprises a plurality of light sources configured to respectively emit the kinds of light, and the at least one controller is configured to sequentially control the light sources to respectively emit the kinds of light according to the exposure time sequences.

12. The optical exposure system of claim 8, wherein the kinds of light respectively have different incident angles relative to the photopolymer.

13. The optical exposure system of claim 12, wherein the kinds of light have an identical wavelength.

14. The optical exposure system of claim 12, further comprising:

a rotating member configured to rotate the photopolymer,
wherein the at least one controller is further configured to control the rotating member to sequentially rotate the photopolymer to a plurality of angles respectively corresponding to the kinds of light according to the exposure time sequences.

15. The optical exposure system of claim 12, wherein the light guiding elements are configured to respectively guide the kinds of light to the photopolymer with the incident angles, and the optical exposure system further comprises:

a plurality of light valves optically coupled to the photopolymer respectively via the light guiding elements,
wherein the at least one controller is configured to sequentially control the light valves to respectively allow the kinds of light to pass through according to the exposure time sequences.

Fig. 1

Fig. 2

EP 4 446 821 A1

Fig. 3

EP 4 446 821 A1

exposing a photopolymer to a plurality of kinds of light for a plurality of cycles, in which each of the cycles includes a plurality of exposure time sequences respectively corresponding to the kinds of light, and any adjacent two of the exposure time sequences of the cycles respectively correspond to two of the kinds of light ⎯ S110

fixing the exposed photopolymer to form a holographic optical element having a plurality of holographic gratings respectively formed by the kinds of light ⎯ S120

Fig. 4

Fig. 5

EP 4 446 821 A1

Fig. 6

EP 4 446 821 A1

Fig. 7

Fig. 8

EP 4 446 821 A1

Fig. 9

Fig. 10

Fig. 11

EP 4 446 821 A1

Fig. 12

Europäisches
Patentamt

European
Patent Office

Office européen
des brevets

# EUROPEAN SEARCH REPORT

**Application Number**

EP 23 16 7333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEI-LAN PIAO ET AL: "Full-color holographic diffuser using time-scheduled iterative exposure", APPLIED OPTICS, vol. 54, no. 16, 1 June 2015 (2015-06-01), page 5252, XP055622280, US ISSN: 0003-6935, DOI: 10.1364/AO.54.005252 * last sentence; page 5252, right-hand column * * sections "3. Time-scheduled iterative exposure for a f-color HOE" and "4. Fabrication of Holographic diffuser"; figures 1, 5, 6, 8 * | 1-15 | INV. G03H1/04 G03H1/26 G03H1/28 ADD. G03H1/22 |
| A | MEI-LAN PIAO ET AL: "Achieving high levels of color uniformity and optical efficiency for a wedge-shaped waveguide head-mounted display using a photopolymer", APPLIED OPTICS, OPTICAL SOCIETY OF AMERICA, WASHINGTON, DC, US, vol. 53, no. 10, 1 April 2014 (2014-04-01), pages 2180-2186, XP001589402, ISSN: 0003-6935, DOI: 10.1364/AO.53.002180 [retrieved on 2014-03-31] * the whole document * | 1-15 | |
| A | KR 101 598 394 B1 (NAT UNIV CHUNGBUK IND ACAD [KR]) 4 March 2016 (2016-03-04) * the whole document * | 1-15 | |

**TECHNICAL FIELDS SEARCHED (IPC)**

G03H

The present search report has been drawn up for all claims

| Place of search | Date of completion of the search | Examiner |
|---|---|---|
| Munich | 21 September 2023 | Lutz, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7333

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2023

| Patent document cited in search report | Publication date | Patent family member(s) | Publication date |
|---|---|---|---|
| KR 101598394 B1 | 04-03-2016 | NONE | |